(19) Europäisches Patentamt
European Patent Office
Office européen des brevets

(11) **EP 2 896 826 B1**

(12) **EUROPEAN PATENT SPECIFICATION**

(45) Date of publication and mention
of the grant of the patent:
**11.04.2018 Bulletin 2018/15**

(21) Application number: **13876437.8**

(22) Date of filing: **26.02.2013**

(51) Int Cl.:
***F03D 1/06*** (2006.01)

(86) International application number:
**PCT/JP2013/054918**

(87) International publication number:
**WO 2014/132328 (04.09.2014 Gazette 2014/36)**

(54) **WINDMILL VANE AND WIND POWER GENERATION DEVICE PROVIDED WITH SAME**

WINDTURBINENROTORBLATT UND WINDTURBINE

PALE D'ÉOLIENNE ET GÉNÉRATRICE ÉOLIENNE DOTÉE DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.07.2015 Bulletin 2015/30**

(73) Proprietor: **Mitsubishi Heavy Industries, Ltd.**
**Tokyo 108-8215 (JP)**

(72) Inventor: **FUKAMI, Koji**
**Tokyo 108-8215 (JP)**

(74) Representative: **Intès, Didier Gérard André et al**
**Cabinet Beau de Loménie**
**158 rue de l'Université**
**75340 Paris Cedex 07 (FR)**

(56) References cited:
**EP-A1- 2 169 217       WO-A2-2011/129696**
**DE-A1- 10 332 875     DE-A1-102006 019 204**
**JP-A- 2000 310 179    JP-A- 2006 152 864**
**JP-A- 2006 521 483    JP-A- 2012 251 448**
**US-A1- 2007 025 856   US-A1- 2011 158 816**
**US-B2- 7 344 360**

## Description

### TECHNICAL FIELD

The present disclosure relates to a wind turbine blade and a wind turbine power generating apparatus.

### BACKGROUND

Wind turbine power generating apparatuses utilizing wind power have become widely used in recent years in view of preservation of the global environment. A wind turbine power generating apparatus converts kinetic energy of wind into rotational energy of blades (more precisely, an entire rotor including the blades), and further converts this rotational energy into electric power in a generator.

A wind turbine power generating apparatus tends to increase in size in view of improvement of the power generation output, which is associated with a continuous increase of the blade tip speed. Thus, erosion is likely to occur from collision of raindrops, dust, or the like on the tip ends of the wind turbine blades. When damage to a wind turbine blade due to erosion becomes apparent, smoothness of the blade surface would be lost, which causes undesirable phenomena such as an increase in noise.

Patent Document 1 discloses a wind turbine blade whose surface is coated by protection coating for restricting erosion.

Further, although not intended to restrict erosion, Patent Documents 2 to 4 disclose a swept-back blade as a wind turbine blade, formed so as to sweep back toward the downstream side in the rotor rotational direction. Patent Document 5 discloses another rotor blade with sweep for a wind power plant.

Citation List

Patent Literature

Patent Document 1: US Patent Application Pub. No. 2011/0142678
Patent Document 2: US Patent No. 7344360
Patent Document 3: US Patent Application Pub. No. 2009/0324416
Patent Document 4: Japanese Unexamined Patent Application Pub. No. 2006-152864
Patent Document 5: US Patent Application Pub. No. 2011/0158816 Further prior art: DE 102006019204 A1

## SUMMARY

Technical Problem

The progression speed of erosion on a wind turbine blade, however, depends greatly on the collision speed of the wind turbine blade against raindrops, dust, or the like. Thus, an increase in the blade tip speed accompanying a slight increase in the blade length increases the progression speed of erosion considerably. Therefore, it would be difficult to address the future trend of the further increasing blade length, if one should cling to the conventional idea of increasing the erosion-resisting performance of a wind turbine blade by protection coating, as described in Patent Document 1.

Furthermore, there is no disclosure in Patent Documents 2 to 4 as to improving the erosion-resisting performance of a wind turbine blade.

An object of at least one embodiment of the present invention is to provide a wind turbine blade having great erosion-resisting performance and a wind turbine power generating apparatus including the wind turbine blade.

A wind turbine blade according to at least one embodiment of the present invention is mounted to a hub of a wind turbine. Such an assembly comprises the features of appended claim 1. The wind turbine blade includes an airfoil portion disposed between a blade tip portion and a blade root portion configured to be connectable to the hub. The airfoil portion includes a leading edge which sweeps back from a blade axis direction at least in a sweepback region disposed on a blade tip portion side. In a non-claimed embodiment, an angle A [degree] between the blade axis direction and a tangent line of the leading edge satisfies a relationship of:

$$A \geq 250 \times \frac{r}{R} - 225$$

in a range of $0.9 \leq r/R \leq 1$ in the blade axis direction, where

R is a distance from a rotational center of the hub to the blade tip portion in the blade axis direction, and r is a distance from the rotational center of the hub to a certain point on the leading edge in the blade axis direction.

According to the above wind turbine blade, since the leading edge in the sweepback region sweeps back from the blade axis direction, the collision angle between the leading edge and raindrops, dust, or the like is shallow, thereby reducing the collision speed Vn of the leading edge with respect to raindrops, dust, or the like. As a result, erosion-resisting performance improves. It is possible to achieve a great erosion restricting effect in the range of $0.9 \leq r/R \leq 1$ in the blade axis direction, because the angle (sweepback angle) A between the tangent line of the leading edge and the blade axis direction satisfies the relationship of

$$A \geq 250 \times \frac{r}{R} - 225$$

in the above region. According to findings of the present inventors, the range of $0.9 \leq r/R \leq 1$ in the blade axis direction is a region which tends to produce noise. It is advantageous to be able to improve erosion-resisting performance in the above region with the above simple technique of setting the sweepback angle A for the leading edge, at least from the perspective of restricting noise generation.

In some non-claimed embodiments, the angle A between the blade axis direction and the tangent line of the leading edge satisfies a relationship of:

$$A \geq 125 \times \frac{r}{R} - 100$$

in a range of $0.8 \leq r/R \leq 1$ in the blade axis direction.

As a result, it is possible to achieve the erosion-restricting effect in the range of $0.8 \leq r/R \leq 1$ in the blade axis direction, where the contribution to noise generation is relatively large.

In one embodiment, the angle A between the blade axis direction and the tangent line of the leading edge satisfies a relationship of:

$$A \geq \frac{250}{3} \times \frac{r}{R} - \frac{175}{3}$$

in a range of $0.7 \leq r/R \leq 1$ in the blade axis direction.

According to findings of the present inventors, contribution to the power generation efficiency is large in the range of $0.8 \leq r/R \leq 0.9$ in the blade axis direction. Thus, setting a sweepback angle A so as to satisfy the relationship of

$$A \geq \frac{250}{3} \times \frac{r}{R} - \frac{175}{3}$$

to be able to restrict erosion in the range of $0.8 \leq r/R \leq 0.9$ is advantageous not only in restricting noise generation but also from the perspective of maintaining the power generation efficiency.

In one embodiment, the angle A between the blade axis direction and the tangent line of the leading edge satisfies a relationship of:

$$A \geq \frac{125}{2} \times \frac{r}{R} - \frac{75}{2}$$

in a range of $0.6 \leq r/R \leq 1$ in the blade axis direction.

As a result, it is possible to restrict a decrease in the power generation efficiency due to erosion more effectively.

In one embodiment, the angle A between the blade axis direction and the tangent line of the leading edge satisfies a relationship of:

$$A \geq 50 \times \frac{r}{R} - 25$$

in a range of $0.5 \leq r/R \leq 1$ in the blade axis direction.

As a result, it is possible to restrict a decrease in the power generation efficiency due to erosion even more effectively.

A wind turbine power generating apparatus according to at least one embodiment of the present invention includes the features of claim 4: at least one wind turbine blade; a hub to which each of the at least one wind turbine blade is mounted; and a generator for converting rotation energy of a rotor including the hub and the at least one wind turbine blade to electric power. Each of the at least one wind turbine blade includes an airfoil portion disposed between a blade tip portion and a blade root portion configured to be connectable to the hub. The airfoil portion includes a leading edge which sweeps back from a blade axis direction at least in a sweepback region disposed on a blade tip portion side. In a non-claimed embodiment, an angle A [degree] between the blade axis direction and a tangent line of the leading edge satisfies a relationship of:

$$A \geq 250 \times \frac{r}{R} - 225$$

in a range of $0.9 \leq r/R \leq 1$ in the blade axis direction, where

R is a distance from a rotational center of the hub to the blade tip portion in the blade axis direction, and r is a distance from the rotational center of the hub to a certain point on the leading edge in the blade axis direction.

According to the above wind turbine power generating apparatus, since the leading edge in the sweepback region inclines with respect to the blade axis direction, the collision angle between the leading edge and raindrops, dust, or the like is shallow, thereby reducing the collision speed Vn of the leading edge with respect to raindrops, dust, or the like. As a result, the erosion-resisting performance improves. It is possible to achieve a great erosion-restricting effect in the range of $0.9 \leq r/R \leq 1$ in the blade axis direction in particular, because the angle (sweepback angle) A between the tangent line of the leading edge and the blade axis direction satisfies the relationship of

$$A \geq 250 \times \frac{r}{R} - 225$$

in the above region. As described above, it is advantageous to be able to improve the erosion-resisting performance in the above region ($0.9 \leq r/R \leq 1$) in the blade axis direction, where noise is likely to be produced, with the above simple technique of setting the sweepback angle A, at least from the perspective of restricting noise generation.

In some non-claimed embodiments, the angle A between the blade axis direction and the tangent line of the leading edge satisfies a relationship of:

$$A \geq 125 \times \frac{r}{R} - 100$$

in a range of $0.8 \leq r/R \leq 1$ in the blade axis direction.

According to at least one embodiment of the present invention, since the leading edge in the sweepback region inclines with respect to the blade axis direction, the collision angle between the leading edge and raindrops, dust, or the like is shallow, thereby reducing the collision speed Vn of the leading edge with respect to raindrops, dust, or the like. As a result, the erosion-resisting performance improves. It is possible to achieve a great erosion-restricting effect in the range of $0.9 \leq r/R \leq 1$ in the blade axis direction in particular, because the angle (sweepback angle) A between the tangent line of the leading edge and the blade axis direction satisfies the relationship of

$$A \geq 250 \times \frac{r}{R} - 225$$

in the above region. It is advantageous to be able to improve the erosion-resisting performance in the region ($0.9 \leq r/R \leq 1$) in the blade axis direction, where noise is likely to be produced, with the above simple technique of setting the sweepback angle A, at least from the perspective of restricting noise generation.

BRIEF DESCRIPTION OF DRAWINGS

FIG. 1 is a diagram of an exemplary configuration of a wind turbine power generating apparatus.
FIG. 2A is planar view of a schematic configuration of a wind turbine blade having a typical straight leading edge.
FIG. 2B is a planar view of a schematic configuration of a wind turbine blade according to an embodiment of the present invention.
FIG. 3A is a graph of an amount of sweepback of a leading edge against the radial position r/R.
FIG. 3B is a graph of an angle of the leading edge against the radial position r/R.
FIG. 4A illustrates graphs individually showing the erosion incubation period, the sweepback angle and the amount of sweepback of the leading edge, where k=2 and r/R=0.5.
FIG. 4B illustrates graphs individually showing the erosion incubation period, the sweepback angle and the amount of sweepback of the leading edge, where k=2 and r/R=0.6.
FIG. 4C illustrates graphs individually showing the erosion incubation period, the sweepback angle and the amount of sweepback of the leading edge, where k=2 and r/R=0.7.
FIG. 4D illustrates graphs individually showing the erosion incubation period, the sweepback angle and the amount of sweepback of the leading edge, where k=2 and r/R=0.8.
FIG. 4E illustrates graphs individually showing the erosion incubation period, the sweepback angle and the amount of sweepback of the leading edge, where k=2 and r/R=0.88.
FIG. 5A illustrates graphs individually showing the erosion incubation period, the sweepback angle and the amount of sweepback of the leading edge, where k=2.5 and r/R=0.5.
FIG. 5B illustrates graphs individually showing the erosion incubation period, the sweepback angle and the amount of sweepback of the leading edge, where k=2.5 and r/R=0.6.
FIG. 5C illustrates graphs individually showing the erosion incubation period, the sweepback angle and the amount of sweepback of the leading edge, where k=2.5 and r/R=0.7.
FIG. 5D illustrates graphs individually showing the erosion incubation period, the sweepback angle and the amount of sweepback of the leading edge, where k=2.5 and r/R=0.8.
FIG. 5E illustrates graphs individually showing the erosion incubation period, the sweepback angle and the amount of sweepback of the leading edge, where k=2.5 and r/R=0.86.
FIG.6A illustrates graphs individually showing the erosion incubation period, the sweepback angle and the amount of sweepback of the leading edge, where k=3 and r/R=0.5.
FIG. 6B illustrates graphs individually showing the erosion incubation period, the sweepback angle and the amount of sweepback of the leading edge, where k=3 and r/R=0.6.
FIG. 6C illustrates graphs individually showing the erosion incubation period, the sweepback angle and the amount of sweepback of the leading edge, where k=3 and r/R=0.7.
FIG. 6D illustrates graphs individually showing the erosion incubation period, the sweepback angle and the amount of sweepback of the leading edge, where k=3 and r/R=0.8.

FIG. 6E illustrates graphs individually showing the erosion incubation period, the sweepback angle and the amount of sweepback of the leading edge, where k=3 and r/R=0.84.

DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

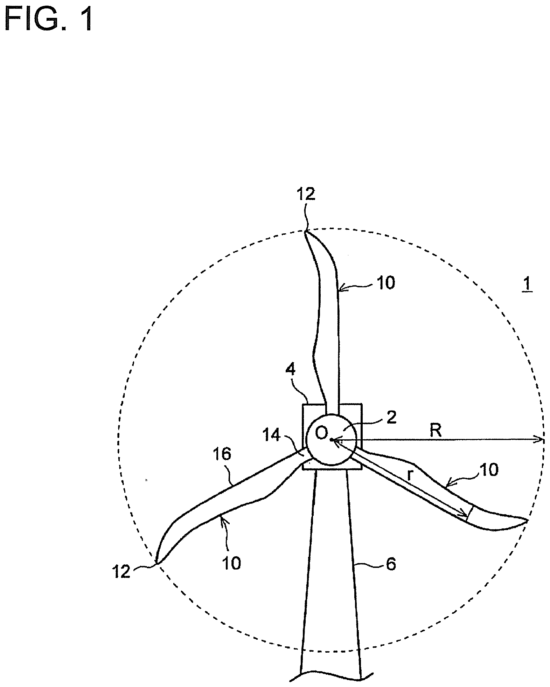

FIG. 1 is a diagram of an exemplary configuration of a wind turbine power generating apparatus.

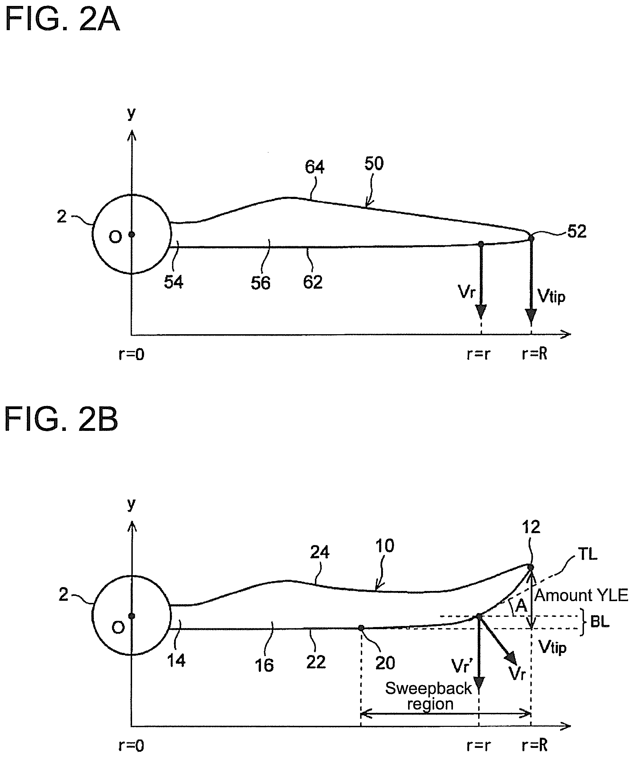

The wind turbine power generating apparatus 1 illustrated in FIG. 1 includes one or more (in this example, three) wind turbine blades 10, a hub 2 to which the wind turbine blades 10 are mounted, a nacelle 4 supporting a rotor which includes the wind turbine blades 10 and the hub 2, and a tower 6 rotatably supporting the nacelle 4. In some embodiments, each wind turbine blade 10 has the configuration illustrated in FIG. 2, which will be described below. Rotation of the rotor is inputted into a generator (not illustrated) so that electric power is generated in the generator. The wind turbine blades 10 are mounted to the hub 2 by fixing blade root portions 14 of the wind turbine blades 10 to the hub 2 using optional fastening members.

FIG. 2A is a planar view of a schematic configuration of a wind turbine blade with a typical straight leading edge, which is a wind turbine blade with no sweepback angle or a very small sweepback angle.

The wind turbine blade 50 illustrated in FIG. 2A includes a blade tip portion 52, a blade root portion 54 configured to be connectable to the hub 2, and an airfoil portion 56 disposed between the blade tip portion 52 and the blade root portion 54. The airfoil portion 56 includes a leading edge 62 and a trailing edge 64. In this wind turbine blade 50, the leading edge 62 is a straight line substantially parallel to the blade axis direction BL extending from the blade root portion 54 to the blade tip portion 52.

In the present specification, the blade axis is a straight line passing through the center axis of the blade root portion 54 of a cylindrical shape. Thus, the blade axis direction is a direction parallel to the blade axis. Further, the distance from the rotation center O of the hub 2 to the blade tip portion 52 in the blade axis direction is referred to as "R", while the distance from the rotation center O of the hub 2 to a certain point on the leading edge 62 in the blade axis direction is referred to as "r".

Meanwhile, it is known from experience that there is a relationship of L oc $Vn^{-6.7}$ between the period L before damage becomes apparent due to erosion on the wind turbine blade, which is the erosion incubation period L, and the collision speed Vn of the wind turbine blade against raindrops, dust, or the like. Since the moving speed of the rain drops, dust, or the like is much lower than the tip speed Vr of the wind turbine blade, the collision speed Vn can be approximated by the tip speed Vr of the wind turbine blade. The tip speed Vr of the wind turbine blade is proportional to the radial position r. Thus, in a case of the wind turbine blade 50 where the leading edge 62 is a straight line parallel to the blade axis direction BL, when defining the erosion incubation period at a reference radial position r* as L*, the erosion incubation period L at a certain radial position r (>r*) at the blade tip portion 52 side with respect to the reference radial position r* is represented by the following equation (1).

$$L = (r^* / r)^{6.7} \times L^* \qquad (1)$$

Accordingly, in the wind turbine blade 50, the progression speed of erosion increases toward the blade tip portion 52, and damage due to erosion is more likely to be apparent toward the same. Especially, the tip speed Vtip reaches its maximum at the blade tip portion 52 in the entire blade, and thus the blade tip portion 52 is most likely to be damaged by erosion.

In view of this, in some embodiments, the wind turbine blade has the following configuration to restrict erosion at least at the blade tip portion.

FIG. 2B is a planar view of a schematic configuration of a wind turbine blade according to an embodiment of the present invention.

The wind turbine blade 10 illustrated in FIG. 2B includes a blade tip portion 12, a blade root portion 14 configured to be connectable to the hub 2, and an airfoil portion 16 positioned between the blade tip portion 12 and the blade root portion 14. The airfoil portion 16 includes a leading edge 22 and a trailing edge 24.

In a case of the wind turbine blade 10, the collision speed Vn for determining the erosion incubation period of the leading edge 22 at a radial position r is not the tip speed Vr itself at the radial position r, but a component Vr' along the normal direction of the leading edge 22 of the tip speed vector having a magnitude of Vr. That is, when the angle between the blade axis direction BL and the tangent line TL of the leading edge 22 at a radial position r, which is the sweepback angle, is referred to as A, the collision speed Vn is represented by a relationship of Vn = Vr × cosA.

Thus, to restrict progression of erosion in the vicinity of the blade tip portion, the leading edge 22 is swept back from the blade axis direction BL in the sweepback region positioned at the blade tip portion 12 side of the wind turbine blade 10, so as to set the angle (sweepback angle) A between the tangent line TL of the leading edge and the blade axis direction BL to greater than zero. The sweepback region here is a region at the blade tip portion 12 side with respect to the sweepback starting point 20 of the leading edge 22.

According to findings of the present inventors, influence on the noise is large in a region at the blade tip portion 12 side ($0.9 \leq r/R \leq 1$), and the influence on the noise becomes the largest in the vicinity of the blade tip portion 12. Thus, improving the erosion-resisting performance in the range of $0.9 \leq r/R \leq 1$ is advantageous at least from the perspective of restricting noise generation.

Further, if the erosion incubation period at the blade tip portion 12, where damage due to erosion is the most serious, can be improved approximately twice as compared to that of the wind turbine blade with a straight leading edge, it is possible to retard appearance of the erosion until the end of the standard lifetime (20 to 25 years, for instance) of the wind turbine power generating apparatus 1 in the vicinity of the blade tip of the wind turbine blade 10, thereby enjoying enough merits.

Thus, in some non-claimed embodiments, the wind turbine blade 10 has the angle A [degree] between the blade axis direction BL and the tangent line TL of the leading edge 22, which is hereinafter referred to as the sweepback angle A, the sweepback angle A being set so as to satisfy the following relationship (2) in a range of $0.9 \leq r/R \leq 1$ in the blade axis direction.

$$A \geq 250 \times \frac{r}{R} - 225 \qquad (2)$$

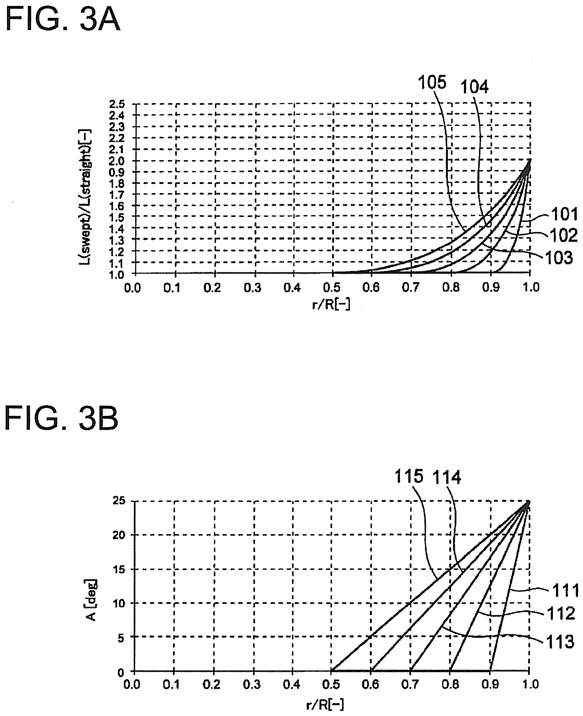

Referring to FIGs. 3A and 3B, the range of the above sweepback angle A will be described specifically. FIG. 3A is a graph of the erosion incubation period against the radial position r/R. FIG. 3B is a graph of the sweepback angle of the leading edge against the radial position r/R. The erosion incubation period in FIG. 3A is represented as a ratio of the incubation period Lswept of the wind turbine blade 10 with a sweepback angle (see FIG. 2B) to the incubation period Lstraight of the wind turbine blade 50 with a straight leading edge (see FIG. 2A). The sweepback angle A in FIG. 3B is an angle formed between the blade axis direction BL and the tangent line TL of the leading edge 22 at a radial position r.

The above relationship (2) indicates that the sweepback angle A is on the straight line 111 in FIG. 3B or falls within the range above the straight line 111. Further, the ratio of the erosion incubation period Lswept of the leading edge 22 having the sweepback angle A indicated by the straight line 111 to the erosion incubation period Lstraight is indicated by the curve 101 in FIG. 3A. Thus, when the sweepback angle A satisfies the above relationship (2) in the range of $0.9 \leq r/R \leq 1$ in the blade axis direction, the ratio of the erosion incubation period Lswept to the erosion incubation period Lstraight is on the curve 101 or falls within the range above the curve 101.

In a case of the wind turbine blade 10 having a distribution of the sweepback angle A in accordance with the straight line 111 of FIG. 3B, the radial position r/R of the sweepback starting point 20 is 0.9, which makes it possible to obtain a sufficient sweepback angle A in the range of $0.9 \leq r/R \leq 1$ in the blade axis direction, which is the advantageous range from the perspective of restricting noise generation. Further, in a case of the wind turbine blade 10 having the distribution of the sweepback angle A in accordance with the straight line 111, the erosion incubation period Lswept at the blade tip portion 12 is twice as large as that of the wind turbine blade 50 with a straight leading edge, as indicated by the curve 101 in FIG. 3A.

As described above, when the sweepback angle A of the leading edge 22 is set so as to satisfy the above relationship (2), the collision angle of the leading edge with respect to raindrops, dust, or the like is shallow in the region ($0.9 \leq r/R \leq 1$), where noise tends to be produced, so that the collision speed Vn of the leading edge 22 with respect to raindrops, dust, or the like is reduced and the erosion-resisting performance is improved.

Further, it is possible to improve the erosion incubation period Lswept at the blade tip portion 12, where damage due to erosion is the most serious, as approximately twice as the erosion incubation period Lstraight of the wind turbine blade 50 with a straight leading edge. As a result, it is possible to retard appearance of erosion until the end of the standard lifetime (20 to 25 years, for instance) of the wind turbine power generating apparatus 1 in the vicinity of the blade tip of the wind turbine blade 10, thereby enjoying enough merits.

In one non-claimed embodiment, the angle A of the wind turbine blade 10 between the blade axis direction BL and the tangent line TL of the leading edge 12 may be set so as to satisfy the following relationship (3) in a range of $0.8 \leq r/R \leq 1$ in the blade axis direction BL.

$$A \geq 125 \times \frac{r}{R} - 100 \qquad (3)$$

The above relationship (3) indicates that the sweepback angle A is on the straight line 112 illustrated in FIG. 3B or within the range above the straight line 112. Further, the curve 102 in FIG. 3A indicates the ratio of the erosion incubation period Lswept of the leading edge 22 having the sweepback angle A indicated by the straight line 112 to the erosion incubation period Lstraight. Thus, when the sweepback angle A satisfies the above relationship (3) within the range of of $0.8 \leq r/R \leq 1$ in the blade axis direction, the ratio of the erosion incubation period Lswept to the erosion incubation period Lstraight is on the curve 102 or within the range above the curve 102.

In a case of the wind turbine blade 10 having a distribution of the sweepback angle A in accordance with the straight line 112 of FIG. 3B, the radial position r/R of the sweepback starting point 20 is 0.8, which makes it possible to obtain a sufficient sweepback angle A in the range of $0.8 \leq r/R \leq 1$ in the blade axis direction, where the contribution to noise generation is relatively large. Further, in a case of the wind turbine blade 10 having the distribution of the sweepback angle A in accordance with the straight line 112, the erosion incubation period Lswept at the blade tip portion 12 is twice as large as that of the wind turbine blade 50 with a straight leading edge, as indicated by the curve 102 in FIG. 3A.

Setting the sweepback angle A of the leading edge 22 so as to satisfy the above relationship (3) makes it possible to obtain the erosion restricting effect in the range of $0.8 \leq r/R \leq 1$ in the blade axis direction, where the contribution to noise generation is relatively large. Particularly, it is possible to improve the erosion incubation period Lswept at the blade tip portion 12, where damage due to erosion is most likely to happen and influence on the noise is the largest, at least twice as large as the erosion incubation period Lstraight of the wind turbine blade 50 having a straight leading edge. As a result, it is possible to retard appearance of the erosion until the end of the standard lifetime of the wind turbine power generating apparatus 1 in the vicinity of the blade tip of the wind turbine blade 10.

In one embodiment, the angle A of the wind turbine blade 10 between the blade axis direction BL and the tangent line TL of the leading edge 22 may be set so as to satisfy the following relationship (4) in a range of $0.7 \leq r/R \leq 1$ in the blade axis direction BL.

$$ A \geq \frac{250}{3} \times \frac{r}{R} - \frac{175}{3} \qquad (4) $$

The above relationship (4) indicates that the sweepback angle A is on the straight line 113 illustrated in FIG. 3B, or falls within the range above the straight line 113. Further, the curve 103 in FIG. 3A indicates the ratio of the erosion incubation period Lswept of the leading edge 22 having the sweepback angle A indicated by the straight line 113 to the erosion incubation period Lstraight. Thus, when the sweepback angle A satisfies the above relationship (4) within the range of of $0.7 \leq r/R \leq 1$ in the blade axis direction, the ratio of the erosion incubation period Lswept to the erosion incubation period Lstraight is on the curve 103 or within the range above the curve 103.

In a case of the wind turbine blade 10 having a distribution of the sweepback angle A in accordance with the straight line 113 of FIG. 3B, the radial position r/R of the sweepback starting point 20 is 0.8, which makes it possible to obtain a sweepback angle A in the range of $0.8 \leq r/R \leq 1$ in the blade axis direction, where the contribution to noise generation is relatively large. Further, in a case of the wind turbine blade having the distribution of the sweepback angle A in accordance with the straight line 112, the erosion incubation period Lswept at the blade tip portion 12 is twice as large as that of the wind turbine blade 50 with a straight leading edge, as indicated by the curve 103 in FIG. 3A.

Setting the sweepback angle A of the leading edge 22 so as to satisfy the above relationship (4) makes it possible to achieve the erosion restricting effect in the broad range of the blade tip side, where the contribution to noise generation is relatively large. Particularly, it is possible to improve the erosion incubation period Lswept at the blade tip portion 12, where damage due to erosion is most likely to happen and influence on the noise is the largest, at least twice as large as the erosion incubation period Lstraight of the wind turbine blade 50 with a straight leading edge. As a result, it is possible to retard appearance of the erosion to the end of the standard lifetime of the wind turbine power generating apparatus 1 in the vicinity of the blade tip of the wind turbine blade 10.

Furthermore, setting the sweepback angle A of the leading edge 22 so as to satisfy the above relationship (4) makes it possible to retard progression of erosion in the range of $0.8 \leq r/R \leq 0.9$ in the blade axis direction, where the contribution to power generation efficiency is large. This is clear from the curve 103 in FIG. 3A.

Therefore, setting the sweepback angle A of the leading edge 22 to satisfy the above relationship (4) is advantageous not only in restricting noise generation but also from the perspective of maintaining the power generation efficiency.

In one embodiment, the angle A of the wind turbine blade 10 between the blade axis direction BL and the tangent line TL of the leading edge 22 may be set so as to satisfy the following relationship (5) in a range of $0.6 \leq r/R \leq 1$ in the blade axis direction BL.

$$ A \geq \frac{125}{2} \times \frac{r}{R} - \frac{75}{2} \qquad (5) $$

The above relationship (5) indicates that the sweepback angle A is on the straight line 114 illustrated in FIG. 3B or falls within the range above the straight line 114. Further, the curve 104 in FIG. 3A indicates the ratio of the erosion incubation period Lswept of the leading edge 22 having the sweepback angle A indicated by the straight line 114 to the erosion incubation period Lstraight. Thus, when the sweepback angle A satisfies the above relationship (5) within the range of of $0.6 \leq r/R \leq 1$ in the blade axis direction, the ratio of the erosion incubation period Lswept to the erosion incubation period Lstraight is on the curve 104 or within the range above the curve 104.

In a case of the wind turbine blade 10 having a distribution of the sweepback angle A in accordance with the straight line 114 of FIG. 3B, the radial position r/R of the sweepback starting point 20 is 0.6, which makes it possible to obtain a sufficient sweepback angle A in the range of $0.6 \leq r/R \leq 1$ in the blade axis direction, where the contribution to maintaining the power generation efficiency is relatively large. As a result, in addition to the noise restricting effect, it is possible to restrict a decrease in the power generation efficiency due to erosion even more effectively.

In one embodiment, the angle A (degree) of the wind turbine blade 10 between the blade axis direction BL and the tangent line TL of the leading edge 22 may be set so as to satisfy the following relationship (6) in a range of $0.5 \leq r/R \leq 1$ in the blade axis direction BL.

$$A \geq 50 \times \frac{r}{R} - 25 \qquad (6)$$

The above relationship (6) indicates that the sweepback angle A is on the straight line 115 illustrated in FIG. 3B, or falls within the range above the straight line 115. Further, the curve 105 in FIG. 3A indicates the ratio of the erosion incubation period Lswept of the leading edge 22 having the sweepback angle A indicated by the straight line 115 to the erosion incubation period Lstraight. Thus, when the sweepback angle A satisfies the above relationship (6) within the range of $0.5 \leq r/R \leq 1$ in the blade axis direction, the ratio of the erosion incubation period Lswept to the erosion incubation period Lstraight is on the curve 105 or within the range above the curve 105.

In a case of the wind turbine blade 10 having a distribution of the sweepback angle A in accordance with the straight line 115 of FIG. 3B, the radial position r/R of the sweepback starting point 20 is 0.5, which makes it possible to obtain a sufficient sweepback angle A in the range of $0.5 \leq r/R \leq 1$ in the blade axis direction, where the contribution to maintaining the power generation efficiency is relatively large. As a result, in addition to the noise restricting effect, it is possible to restrict a decrease in the power generation efficiency due to erosion even more effectively.

As described above, according to the above embodiments, since the leading edge in the sweepback region inclines with respect to the blade axis direction, the collision angle between the leading edge and raindrops, dust, or the like is shallow, thereby reducing the collision speed Vn of the leading edge with respect to raindrops, dust, or the like. As a result, erosion-resisting performance improves. It is possible to improve the erosion resisting performance in the range of $0.9 \leq r/R \leq 1$ in the blade axis direction, where noise tends to be generated, with the simple technique of setting the sweepback angle. This is advantageous at least from the perspective of restricting noise generation.

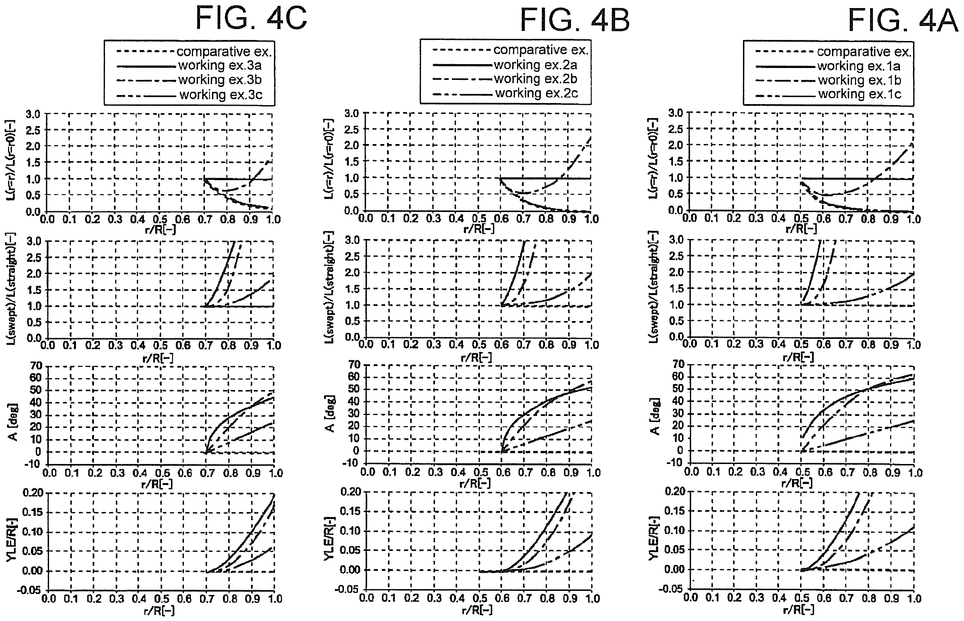

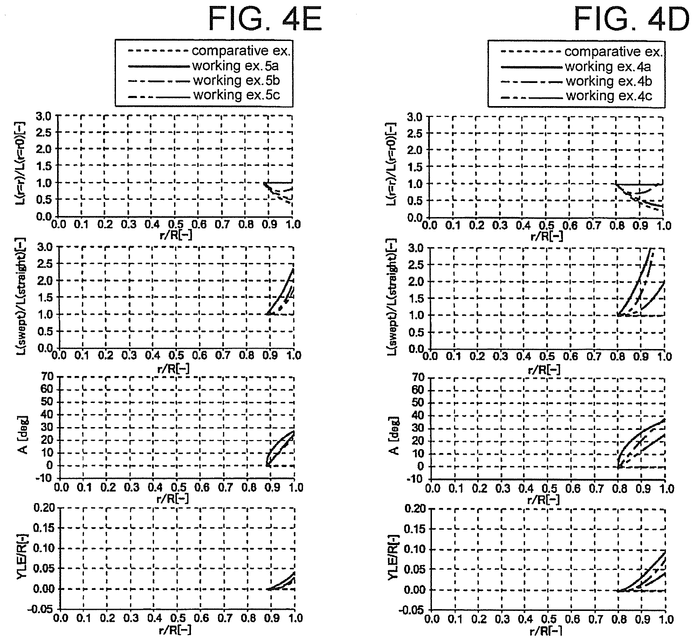

In FIGs. 4A to 6E, the relationship between the configuration of the wind turbine blade according to one embodiment and the erosion incubation period is illustrated.

FIGs. 4A to 4E each illustrate graphs individually showing the erosion incubation period, the sweepback angle, and the amount of sweepback of the leading edge, where k= 2, for the corresponding radial position.

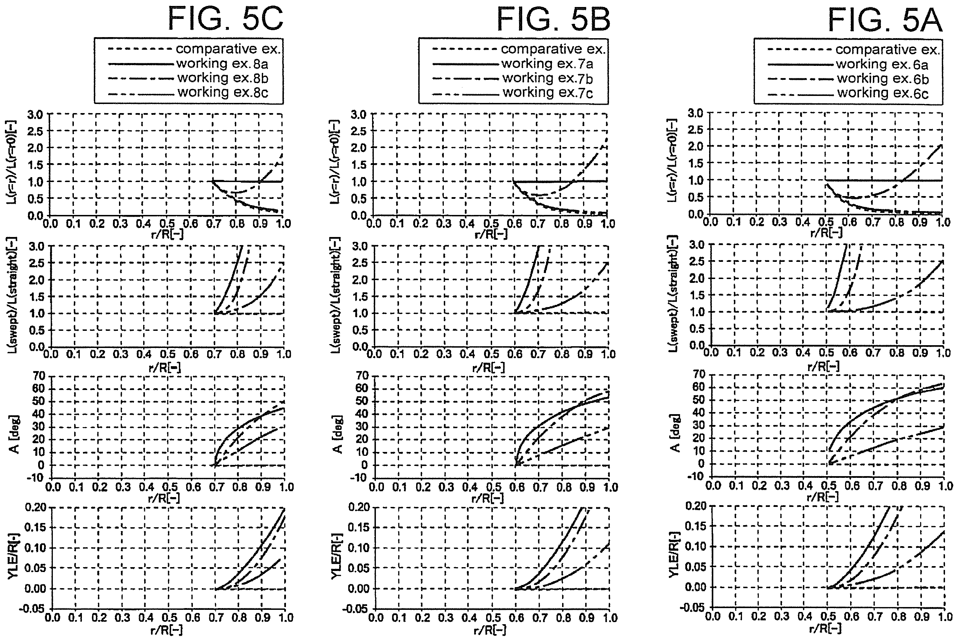

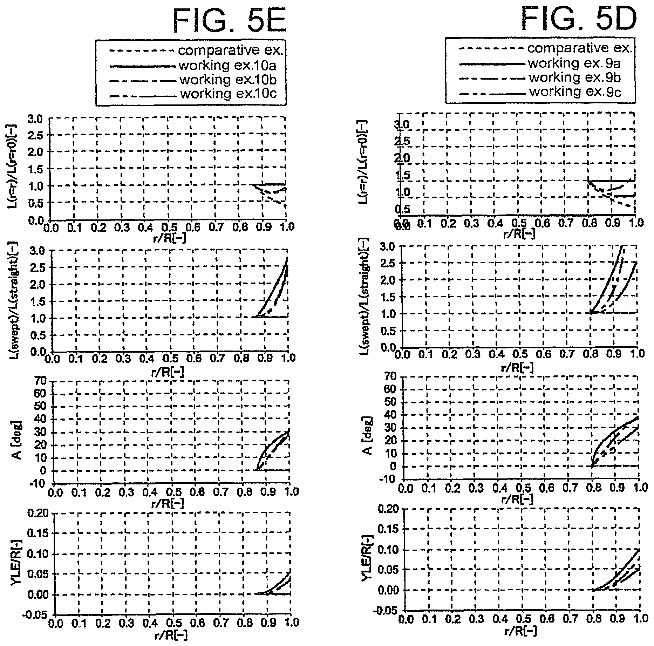

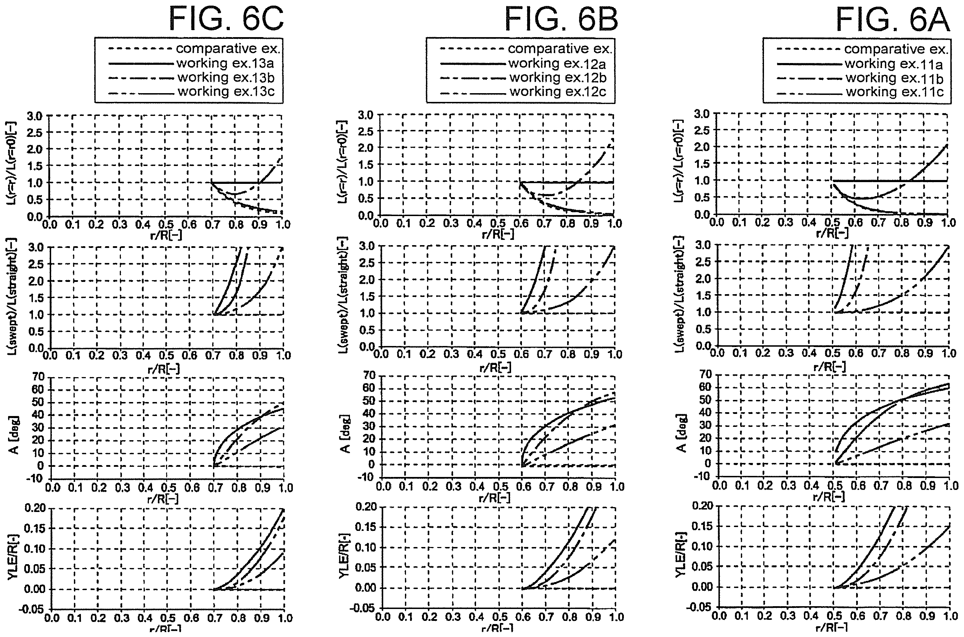

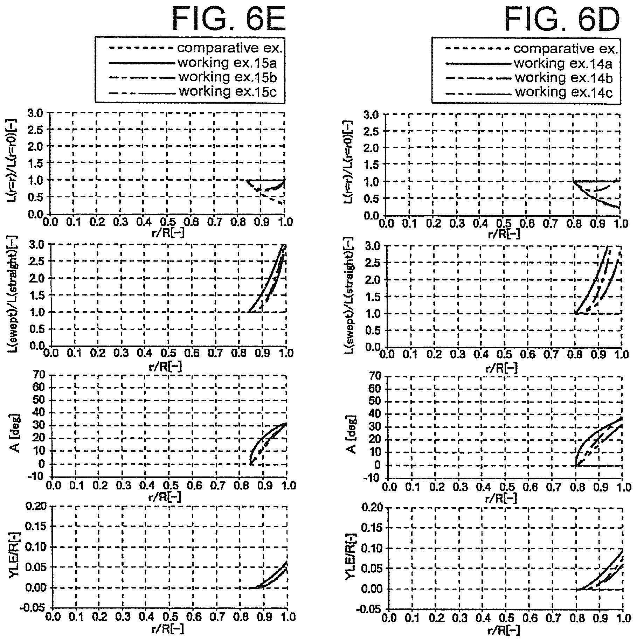

FIGs. 5A to 5E each illustrate graphs individually showing the erosion incubation period, the sweepback angle, and the amount of sweepback of the leading edge, where k= 2.5, for the corresponding radial position. FIGs. 6A to 6E each illustrate graphs individually showing the erosion incubation period, the sweepback angle, and the amount of sweepback of the leading edge, where k= 3, for the corresponding radial position.

Here, "k" is a value indicating the ratio, at the blade tip, of the erosion incubation period of the wind turbine blade (see FIG. 2) with the sweepback angle to that of the wind turbine blade (see FIG. 2A) with a straight leading edge. That is, when k=2, the erosion incubation period Lswept of the wind turbine blade with the sweepback angle is twice longer than the erosion incubation period Lstraight of the wind turbine blade with a straight leading edge, at the blade tip. Similarly, when k=2.5, the erosion incubation period Lswept of the wind turbine blade with the sweepback angle is 2.5 times longer than the erosion incubation period Lstraight of the wind turbine blade with a straight leading edge, at the blade tip. Further, when k=3.0, the erosion incubation period Lswept of the wind turbine blade with the sweepback angle is 3 times longer than the erosion incubation period Lstraight of the wind turbine blade with a straight leading edge, at the blade tip.

Each drawing illustrates, in the following order from the top: a graph showing a ratio (L (r = r) / L (r = r0)) of the erosion incubation period L (r = r) at a radial position r, to the erosion incubation period L (r = r0) at the sweepback starting point r0; a graph indicating a ratio (L (swept) / L (straight)) of the erosion incubation period of the wind turbine blade with the sweepback angle, to that of the wind turbine blade with a straight leading edge; a graph indicating the sweepback angle A; and a graph indicating a dimensionless value of the amount of sweepback $Y_{LE}$ divided by the rotational radius R. In each graph, a dotted line indicates values for the wind turbine blade with a straight leading edge, as a comparative example. A solid line represents the working example Xa (X being an integer from 1 to 15), indicating values for the wind turbine blade with the sweepback angle designed so that the erosion incubation period is uniform from the blade root to the blade tip. A single-dotted chain line represents the working example Xb (X being an integer from 1 to 15), indicating values for the wind turbine blade with the sweepback angle designed so that the erosion incubation period is varied from the blade root to the blade tip. A double-dotted chain line represents the working example Xc (X being an integer from 1 to 15), indicating values for the wind turbine blade with the sweepback angle designed so that the erosion incubation period is varied from the blade root to the blade tip, and also smaller than that of the working example Xb.

As illustrated in FIGs. 4A to 4E, when k=2, the erosion incubation period is longer in each of the working examples Xa to Xc (X being an integer from 1 to 5) than in the comparative example, regardless of the position of r/R. Further, while the difference in the erosion incubation period between the blade root portion and the blade tip portion is large in the comparative example, the difference in the erosion incubation period between the blade root portion and the blade tip portion is small in the first to third working examples.

The same observations can be made in FIGs. 5A to 5E and FIGs. 6A to 6E as in FIGs. 4A to 4E. Thus, according to the embodiments of the present invention, it is clear that it is possible to provide a wind turbine blade with high erosion-resisting performance.

Embodiments of the present invention were described in detail above, but the present invention is not limited thereto, and various amendments and modifications may be implemented within a scope that does not depart from the present invention.

Reference Signs List

    1 Wind turbine power generating apparatus
    2 Hub
    4 Rotor
    6 Tower
    10, 50 Wind turbine blade
    12, 52 Blade tip portion
    14, 54 Blade root portion
    16, 56 Airfoil portion
    22, 62 Leading edge
    24, 64 Trailing edge

**Claims**

1. An assembly comprising a hub (2) of a wind turbine and a wind turbine blade (10) mounted to the hub (2) of a wind turbine, the wind turbine blade (10) comprising an airfoil portion (16) disposed between a blade tip (12) and a blade root portion (14) configured to be connectable to the hub (2),
   wherein the airfoil portion (16) includes a leading edge (22) which sweeps back from a blade axis direction at least in a sweepback region disposed on a blade tip side (12), and
   wherein an angle A [degree] between the blade axis direction and a tangent line (TL) of the leading edge (22) satisfies a relationship of:

$$A \geq \frac{250}{3} \times \frac{r}{R} - \frac{175}{3}$$

   for each r/R in a range of $0.7 \leq r/R \leq 1$ in the blade axis direction, the angle A increasing with r/R in this range, where

      R is a distance from a rotational center (O) of the hub (2) to the blade tip (12) in the blade axis direction, and
   r is a distance from the rotational center (O) of the hub (2) to a certain point on the leading edge (22) in the blade axis direction,
   **characterized in that** the gradient of the angle A decreases with an increase of r/R in this range.

2. The assembly according to claim 1,
   wherein the angle A between the blade axis direction and the tangent line (TL) of the leading edge satisfies a relationship of:

$$A \geq \frac{125}{2} \times \frac{r}{R} - \frac{75}{2}$$

   for each r/R in a range of $0.6 \leq r/R \leq 1$ in the blade axis direction, the angle A increasing with r/R in this range.

3. The assembly according to claim 1,
   wherein the angle A between the blade axis direction and the tangent line (TL) of the leading edge satisfies a relationship of:

$$A \geq 50 \times \frac{r}{R} - 25$$

   for each r/R in a range of $0.5 \leq r/R \leq 1$ in the blade axis direction, the angle A increasing with r/R in this range.

4. A wind turbine power generating apparatus comprising:

      at least one wind turbine blade (10);
      a hub (2) to which each of the at least one wind turbine blade (10) is mounted; and
      a generator for converting rotation energy of a rotor (4) including the hub (2) and the at least one wind turbine blade (10) to electric power,
      wherein each of the at least one wind turbine blade (10) includes an airfoil portion (16) disposed between a blade tip (12) and a blade root portion (14) configured to be connectable to the hub (2),
      wherein the airfoil portion (16) includes a leading edge (22) which sweeps back from a blade axis direction at least in a sweepback region disposed on a blade tip side (12), and
      wherein an angle A [degree] between the blade axis direction and a tangent line (TL) of the leading edge (22) satisfies a relationship of:

$$A \geq \frac{250}{3} \times \frac{r}{R} - \frac{175}{3}$$

for each r/R in a range of $0.7 \leq$ r/R $\leq 1$ in the blade axis direction, the angle A increasing with r/R in this range, where

> R is a distance from a rotational center (O) of the hub (2) to the blade tip (12) in the blade axis direction, and
> r is a distance from the rotational center (O) of the hub (2) to a certain point on the leading edge (22) in the blade axis direction, **characterized in that** the gradient of the angle A decreases with an increase of r/R in this range.

5. The wind turbine power generating apparatus according to claim 4,
   wherein the angle A between the blade axis direction and the tangent line (TL) of the leading edge satisfies a relationship of:

$$A \geq \frac{125}{2} \times \frac{r}{R} - \frac{75}{2}$$

for each r/R in a range of $0.6 \leq$ r/R $\leq 1$ in the blade axis direction, the angle A increasing with r/R in this range.

6. The wind turbine power generating apparatus according to claim 4,
   wherein the angle A between the blade axis direction and the tangent line (TL) of the leading edge satisfies a relationship of:

$$A \geq 50 \times \frac{r}{R} - 25$$

for each r/R in a range of $0.5 \leq$ r/R $\leq 1$ in the blade axis direction, the angle A increasing with r/R in this range.

**Patentansprüche**

1. Anordnung, umfassend eine Nabe (2) einer Windturbine und ein Windturbinenblatt (10), das an der Nabe (2) einer Windturbine befestigt ist, die Windturbine (10) umfassend einen aerodynamischen Profilabschnitt (16), der zwischen einer Blattspitze (12) und einem Blattwurzelabschnitt (14), der dafür ausgelegt ist, mit der Nabe (2) verbunden werden zu können, angeordnet ist,
   wobei der aerodynamische Profilabschnitt (16) eine Vorderkante (22) beinhaltet, die von einer Blattachsenrichtung aus zumindest in einem Pfeilungsabschnitt, der an einer Blattspitzenseite (12) angeordnet ist, nach hinten gepfeilt ist, und
wobei ein Winkel A [Grad] zwischen der Blattachsenrichtung und einer Tangente (TL) der Vorderkante (22) folgende Beziehung erfüllt:

$$A \geq \frac{250}{3} \times \frac{r}{R} - \frac{175}{3}$$

wobei für jedes r/R in einem Bereich von $0.7 \leq$ r/R $\leq 1$ in der Blattachsenrichtung der Winkel A mit r/R in diesem Bereich zunimmt, wobei

> R eine Entfernung von einem Drehzentrum (O) der Nabe (2) zu der Blattspitze (12) in der Blattachsenrichtung ist, und
> r eine Entfernung von dem Drehzentrum (O) der Nabe (2) zu einem bestimmten Punkt auf der Vorderkante (22) in der Blattachsenrichtung ist, **dadurch gekennzeichnet, dass** der Gradient des Winkels A mit einer Zunahme von r/R in diesem Bereich abnimmt.

2. Anordnung nach Anspruch 1,
   wobei der Winkel A zwischen der Blattachsenrichtung und der Tangente (TL) der Vorderkante folgende Beziehung erfüllt:

$$A \geq \frac{125}{2} \times \frac{r}{R} - \frac{75}{2}$$

wobei für jedes r/R in einem Bereich von $0.6 \leq$ r/R $\leq 1$ in der Blattachsenrichtung der Winkel A mit r/R in diesem Bereich zunimmt.

3. Anordnung nach Anspruch 1,
   wobei der Winkel A zwischen der Blattachsenrichtung und der Tangente (TL) der Vorderkante folgende Beziehung erfüllt:

$$A \geq 50 \times \frac{r}{R} - 25$$

wobei für jedes r/R in einem Bereich von $0.5 \leq$ r/R $\leq 1$ in der Blattachsenrichtung der Winkel A mit r/R in diesem Bereich zunimmt.

4. Windturbinen-Stromerzeugungsvorrichtung, umfassend:

> mindestens ein Windturbinenblatt (10),
> eine Nabe (2), an der jedes von dem mindestens einen Windturbinenblatt (10) befestigt ist, und

einen Generator zum Umwandeln von Rotationsenergie eines Rotors (4), der die Nabe (2) und das mindestens eine Windturbinenblatt (10) beinhaltet, in elektrische Energie,
wobei jedes von dem mindestens einen Windturbinenblatt (10) einen aerodynamischen Profilabschnitt (16) beinhaltet, der zwischen einer Blattspitze (12) und einem Blattwurzelabschnitt (14), der dafür ausgelegt ist, mit der Nabe (2) verbunden werden zu können, angeordnet ist,
wobei der aerodynamische Profilabschnitt (16) eine Vorderkante (22) beinhaltet, die von einer Blattachsenrichtung aus zumindest in einem Pfeilungsabschnitt, der an einer Blattspitzenseite (12) angeordnet ist, nach hinten gepfeilt ist, und
wobei der Winkel A [Grad] zwischen der Blattachsenrichtung und einer Tangente (TL) der Vorderkante (22) folgende Beziehung erfüllt:

$$A \geq \frac{250}{3} \times \frac{r}{R} - \frac{175}{3}$$

wobei für jedes r/R in einem Bereich von 0,7 ≤ r/R ≤ 1 in der Blattachsenrichtung der Winkel A mit r/R in diesem Bereich zunimmt, wobei

R eine Entfernung von einem Drehzentrum (O) der Nabe (2) zu der Blattspitze (12) in der Blattachsenrichtung ist, und
r eine Entfernung von dem Drehzentrum (O) der Nabe (2) zu einem bestimmten Punkt auf der Vorderkante (22) in der Blattachsenrichtung ist,
**dadurch gekennzeichnet, dass** der Gradient des Winkels A mit einer Zunahme von r/R in diesem Bereich abnimmt.

**5.** Windturbinen-Stromerzeugungsvorrichtung nach Anspruch 4,
wobei der Winkel A zwischen der Blattachsenrichtung und der Tangente (TL) der Vorderkante folgende Beziehung erfüllt:

$$A \geq \frac{125}{2} \times \frac{r}{R} - \frac{75}{2}$$

wobei für jedes r/R in einem Bereich von 0,6 ≤ r/R ≤ 1 in der Blattachsenrichtung der Winkel A mit r/R in diesem Bereich zunimmt.

**6.** Windturbinen-Stromerzeugungsvorrichtung nach Anspruch 4,
wobei der Winkel A zwischen der Blattachsenrichtung und der Tangente (TL) der Vorderkante folgende Beziehung erfüllt:

$$A \geq 50 \times \frac{r}{R} - 25$$

wobei für jedes r/R in einem Bereich von 0,5 ≤ r/R ≤ 1 in der Blattachsenrichtung der Winkel A mit r/R in diesem Bereich zunimmt.

## Revendications

**1.** Ensemble comportant un moyeu (2) d'une éolienne et une pale d'éolienne (10) montée sur le moyeu (2) d'une éolienne, la pale d'éolienne (10) comportant une partie de profil d'aile (16) disposée entre une tête de pale (12) et une partie de pied de pale (14) configurée pour pouvoir être raccordée au moyeu (2),
dans lequel la partie de profil d'aile (16) comprend un bord d'attaque (22) qui est en flèche arrière par rapport à une direction d'axe de pale au moins dans une zone de flèche arrière disposée sur un côté de tête de pale (12), et
dans lequel un angle A [degré] entre la direction d'axe de pale et une ligne de tangente (TL) du bord d'attaque (22) satisfait une relation de :

$$A \geq \frac{250}{3} \times \frac{r}{R} - \frac{175}{3}$$

pour chaque r/R dans une plage de 0,7 ≤ r/R ≤ 1 dans la direction d'axe de pale, l'angle A augmentant avec r/R dans cette plage, où

R est une distance depuis un centre de rotation (0) du moyeu (2) jusqu'à la tête de pale (12) dans la direction d'axe de pale, et
r est une distance depuis le centre de rotation (0) du moyeu (2) jusqu'à un certain point sur le bord d'attaque (22) dans la direction d'axe de pale,
**caractérisé en ce que** le gradient de l'angle A diminue avec une augmentation de r/R dans cette plage.

**2.** Ensemble selon la revendication 1,
dans lequel l'angle A entre la direction d'axe de pale et la ligne de tangente (TL) du bord d'attaque satisfait une relation de :

$$A \geq \frac{125}{2} \times \frac{r}{R} - \frac{75}{2}$$

pour chaque r/R dans une plage de 0,6 ≤ r/R ≤ 1 dans la direction d'axe de pale, l'angle A augmentant avec r/R dans cette plage.

**3.** Ensemble selon la revendication 1, dans lequel l'angle A entre la direction d'axe de pale et la ligne de tangente (TL) du bord d'attaque satisfait une relation de :

$$A \geq 50 \times \frac{r}{R} - 25$$

pour chaque r/R dans une plage de 0,5 ≤ r/R ≤ 1 dans la direction d'axe de pale, l'angle A augmentant avec r/R dans cette plage.

**4.** Appareil de génération d'énergie du type éolienne comportant :

au moins une pale d'éolienne (10) ; un moyeu (2) sur lequel chacune de la au moins une pale d'éolienne (10) est montée ; et une génératrice destinée à convertir une énergie de rotation d'un rotor (4) comprenant le moyeu (2) et la au moins une pale d'éolienne (10) en énergie électrique, dans lequel chacune de la au moins une pale d'éolienne (10) comprend une partie de profil d'aile (16) disposée entre une tête de pale (12) et une partie de pied de pale (14) configurée pour pouvoir être raccordée au moyeu (2), dans lequel la partie de profil d'aile (16) comprend un bord d'attaque (22) qui est en flèche arrière par rapport à une direction d'axe de pale au moins dans une zone de flèche arrière disposée sur un côté de tête de pale (12), et dans lequel un angle A [degré] entre la direction d'axe de pale et une ligne de tangente (TL) du bord d'attaque (22) satisfait une relation de :

$$A \geq \frac{250}{3} \times \frac{r}{R} - \frac{175}{3}$$

pour chaque r/R dans une plage de 0,7 ≤ r/R ≤ 1 dans la direction d'axe de pale, l'angle A augmentant avec r/R dans cette plage, où

R est une distance depuis un centre de rotation (0) du moyeu (2) jusqu'à la tête de pale (12) dans la direction d'axe de pale, et r est une distance depuis le centre de rotation (0) du moyeu (2) jusqu'à un certain point sur le bord d'attaque (22) dans la direction d'axe de pale, **caractérisé en ce que** le gradient de l'angle A diminue avec une augmentation de r/R dans cette plage.

**5.** Appareil de génération d'énergie à éolienne selon la revendication 4,

dans lequel l'angle A entre la direction d'axe de pale et la ligne de tangente (TL) du bord d'attaque satisfait une relation de :

$$A \geq \frac{125}{2} \times \frac{r}{R} - \frac{75}{2}$$

pour chaque r/R dans une plage de 0,6 ≤ r/R ≤ 1 dans la direction d'axe de pale, l'angle A augmentant avec r/R dans cette plage.

**6.** Appareil de génération d'énergie à éolienne selon la revendication 4, dans lequel l'angle A entre la direction d'axe de pale et la ligne de tangente (TL) du bord d'attaque satisfait une relation de :

$$A \geq 50 \times \frac{r}{R} - 25$$

pour chaque r/R dans une plage de 0,5 ≤ r/R ≤ 1 dans la direction d'axe de pale, l'angle A augmentant avec r/R dans cette plage.

FIG. 1

# FIG. 2A

# FIG. 2B

# FIG. 3A

# FIG. 3B

FIG. 4A  FIG. 4B  FIG. 4C

FIG. 4D

comparative ex.
working ex. 4a
working ex.4b
working ex.4c

FIG. 4E

comparative ex.
working ex. 5a
working ex.5b
working ex.5c

# FIG. 5C

# FIG. 5B

# FIG. 5A

EP 2 896 826 B1

FIG. 5D

FIG. 5E

FIG. 6A

comparative ex.
working ex.11a
working ex.11b
working ex.11c

FIG. 6B

comparative ex.
working ex.12a
working ex.12b
working ex.12c

FIG. 6C

comparative ex.
working ex.13a
working ex.13b
working ex.13c

FIG. 6D

FIG. 6E

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110142678 A
- US 7344360 B
- US 20090324416 A
- JP 2006152864 A
- US 20110158816 A
- DE 102006019204 A1